# EUROPEAN PATENT SPECIFICATION

(11) **EP 0 787 951 B1**
(45) Date of publication and mention of the grant of the patent: **07.01.2004**
(21) Application number: 97200287.7
(22) Date of filing: 03.02.1997
(51) Int. Cl.: F24F 5/00, F24F 1/02, F24D 11/00

(54) **Method and device for homogenizing fluids**
Verfahren und Vorrichtung zum Homogenisieren von Fluiden
Méthode et dispositif pour homogénéiser des fluides

(30) Priority: 02.02.1996 NL 1002241; 08.06.1996 GB 9612018
(43) Date of publication of application: 06.08.1997
(73) Proprietor: Biddle B.V., 9288 HA Kootstertille (NL)
(72) Inventor: Ligtenberg, Petrus Jesephus Joannes Hubertus, 9204 KK Drachten (NL); Price, Michael John, Warwickshire CV11 5AU (GB)
(74) Representative: 't Jong, Bastiaan Jacob

(56) References cited:
- GB-A- 1 167 214
- US-A- 1 987 188
- US-A- 5 318 101

## Description

The invention relates to a method and a device, according to the preambles of claims 1 and 4 respectively.

In a known method of this type the source fluids are supplied continuously and simultaneously and mixed together in order to obtain the fluid with a substantially constant characteristic.

Particularly when the source fluids are for instance present under different pressures it is difficult to adjust the supply of the different source fluids such that each of the source fluids is taken up in the desired quantity.

From WO-A-95/16.175, a method and device for temperature control in a vehicle is known.

The invention now has for its object to provide a method with which in reliable manner different source fluids can be homogenized in desired guantities to a fluid with a substantially constant characteristic.

This object is achieved with the method and device as defined in claims 1 and 4 respectively according to the invention. The mixing ratio of the source fluids can be adjusted very simply and reliably by selecting the duration for which each of the source fluids is ducted. Mutual influencing of the supply of the source fluids is effectively prevented. Due to the cumulative effect of the environment the excess of the characteristic in the one source fluid will be absorbed by this environment and be relinquished again to another source fluid giving too little of the characteristic. The resulting fluid is thereby homogenized.

A favourable aspect of the method according to the invention is that when the environment has a large accumulation capacity, a relatively long cycle duration can be selected in order to keep the fluctuations within desired limits. When the accumulation capacity is smaller the cycle duration will have to be shortened proportionally to still keep the fluctuations within the predetermined limits.

The method according to the invention is particularly suitable for homogenizing source fluids of different temperature to a fluid with a substantially constant temperature. The environment through which the source fluids are alternately ducted has in this case a heat-accumulating effect. A source fluid with a higher temperature gives off heat to the environment so that the temperature of that fluid is reduced, and a source fluid with too low a temperature is heated by the environment so that the fluid leaving the environment has a substantially constant temperature and is therefore homogenized in terms of temperature.

By applying the step of claim 3 the homogenized characteristic of the resulting fluid can be adjusted to a desired value lying between the values of this characteristic in each of the source fluids.

A very suitable embodiment of the device according to the invention is characterized in claim 5. Such an air conditioning device partially recirculates the air in a room area and replenishes it with outside air. Because according to the invention the room air and the outside air are ducted alternately through the housing of the air conditioning device an intended percentage of room air is also recirculated in reliable manner when for instance the outside air pressure is increased by wind influences. Nor can outside air enter the room area directly via the room air inlet in such a case of increased pressure.

In the air conditioning device according to the invention device elements such as fans, baffle plates and the like are accommodated in the duct which have a determined heat capacity, whereby the homogenizing effect is achieved.

According to a further development as characterized in claim 6 the air conditioning device according to the invention can comprise a heating element in the duct.

With the measure of claim 7 is achieved that if the means driving the valve means become inoperative, the valve means are returned in a preferred position, for instance closing off cold outside air.

A preferred embodiment in this respect is characterized in claim 8.

The invention will be further elucidated with reference to the annexed figures.

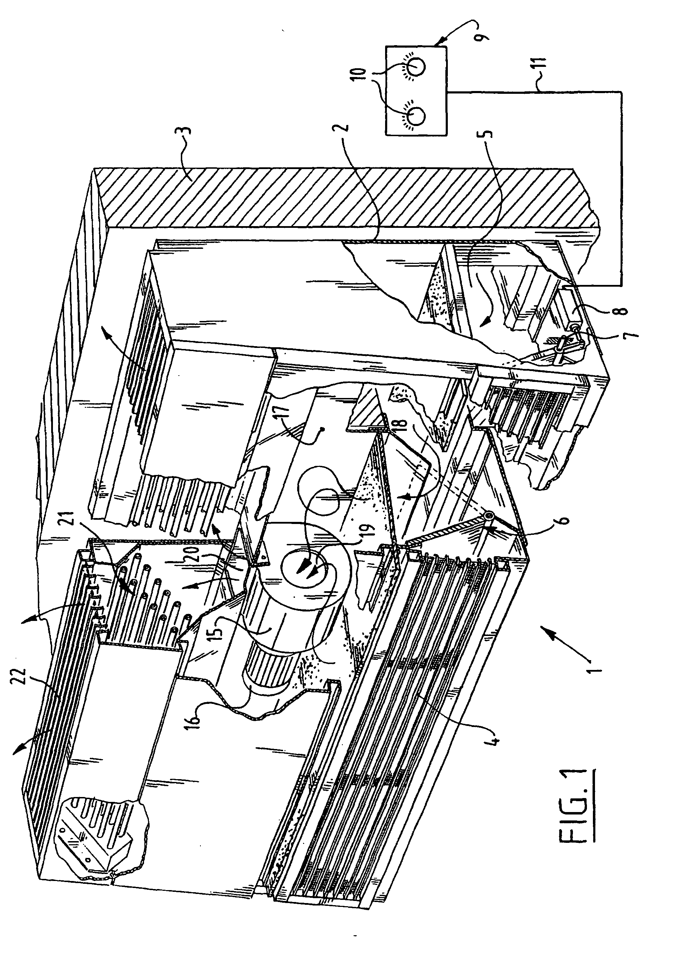

- Figure 1: shows a partly broken away perspective view of an air conditioning device according to the invention.
- Figure 2: is a left end view showing an alternative drive arrangement for a valve of a device according to fig. 1.
- Figure 3: is a sectional view on the line 3-3 in Figure 2.

The air conditioning device 1 comprises a housing 2 with which it is mounted against an outside wall 3. Air conditioning device 1 is intended to partially recirculate and to partially replenish with outside air the air in the room in which it is situated. It is the object herein that the air leaving device 1 has a substantially constant temperature.

The device 1 is provided with a room air inlet 4 on the lower front side and an outside air inlet 5 on the rear side. This outside air inlet 5 connects onto an opening in the wall 3. At the bottom of the housing 2 of the device is mounted a valve 6 which can pivot on a shaft 7 extending in longitudinal direction of housing 2. Using an electromagnet 8 the valve 6 can be pivoted between the position drawn in full lines and the position designated with dashed lines.

In the position drawn in full lines the valve 6 closes the room air inlet 4, while in the position drawn with dashed lines the outside air inlet 5 is closed. In the respective positions only outside air respectively inside air can thus be ducted through the device.

The compartment of housing 2 in which the valve 6 is arranged connects via a filter mat 18 onto a duct 17 in housing 2 which leads upward to an air discharge grid 22. Accommodated in this duct 17 is a fan 15 which is driven by an electric motor 16. The fan 15 draws in air via inlet 19 and blows it out via outlet 20. Arranged in the upper part of duct 17, beyond outlet 20 of fan 15, is a heating element 21 with which the ducted air can be heated. Instead of or in addition to heating element 21 a cooling element can be accommodated in the duct 17 in order to cool the air. Element 21 can of course also operate at choice as heating element or as cooling element according to whether a heating fluid or a cooling fluid is being transported through the conduits thereof.

The electromagnet 8 for operating valve 6 is controlled by a schematically designated control device 9. This latter comprises likewise schematically designated adjusting members 10. Via a control line 11 the control device 9 controls electromagnet 8 such that the latter moves the valve 6 alternately into the position drawn in full lines and the position drawn with dashed lines. Depending on the adjusted position either room air or outside air is therefore fed through duct 17.

Using the adjusting members 10 it is for instance possible to adjust for how long at a time the valve 6 remains in one of the two positions. The total cycle duration can be set for instance with one adjusting member and the ratio of the time for which the valve is in the one position and in the other position can be set with the other adjusting member.

The control device 9 can of course also co-act with sensors so that operation of the valve 6 is controlled subject to environment parameters. The sensors can detect for instance the outside air temperature, the room air temperature and/or the temperature of the air leaving the grid 22.

The cycle duration of the valve movement 6 is preferably set or controlled subject to the heat capacity of the parts of the device accommodated in and adjoining the duct 17. The greater the heat capacity, the longer the cycle duration can be selected in order to keep the fluctuations in the air leaving the grid 22 within determined limits.

The cycle duration can likewise be set subject to the difference in temperature between the room air and the outside air.

In the shown embodiment the ratio of ducted outside air to ducted room air is practically wholly dependent on the ratio of the time periods for which the valve 6 is in the one respectively the other position. The desired mixing ratio can therefore be adjusted precisely and does not depend, or does so only to an insignificant extent, on a possible increased pressure of the outside air due to wind influences.

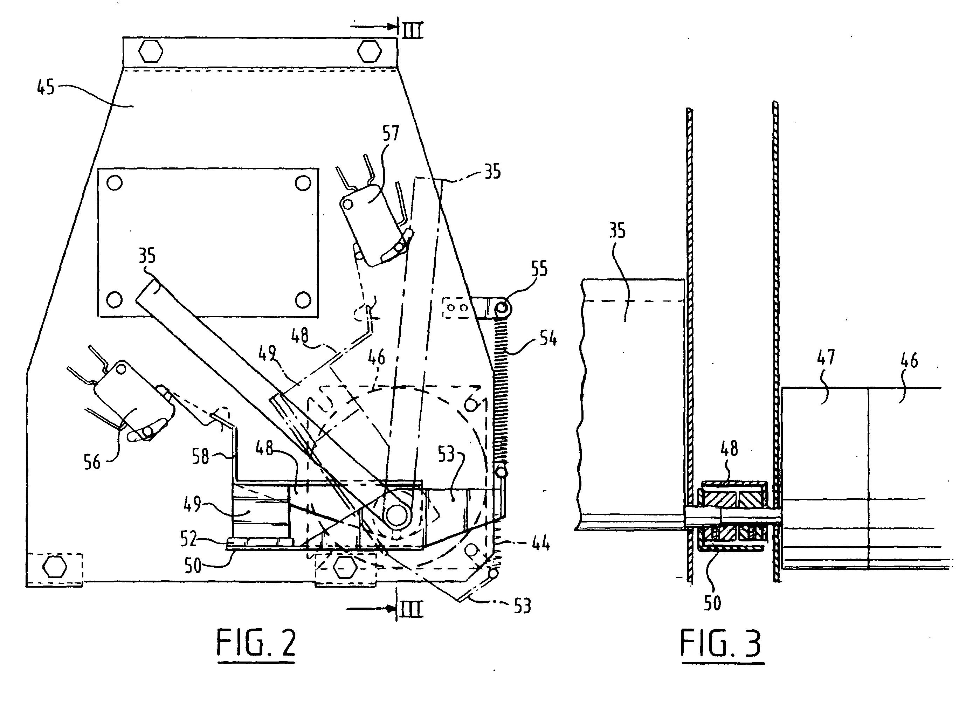

Referring now particularly to Figures 2 and 3 the valve 35 has drive means to effect the necessary operation. In Figure 2 the valve 35 is shown in full lines in a position in which the outside inlet 5 is closed and in broken lines in a position in which room inlet 4 is closed.

Externally of the casing of the unit is provided a housing 45 for the valve drive arrangement and mounted on the side of the housing 45 is a drive motor 46 and associated gearbox 47. The motor is conveniently a reversible synchronous motor which, with reduction gearing in the gearbox 47, typically gives an output of speed of some 4-8 rpm. Mounted on the output shaft of the gearbox 47 is a drive arm 48 and fitted to the drive arm 48 is an electromagnet 49. A driven arm 50 is driving by connected to the drive arm 48 through the electromagnet 49 and an armature plate 52 carried on the driven arm 50. The driven arm 50 is driving by connected to the valve 35.

Operation of the motor 46 through the gearbox 47 to the drive arm 48, through the electromagnet 49, armature 52 and to the driven arm 50, causes the valve 35 to move between the two positions to admit air either from the inlet 4 or the inlet 5.

The driven arm 50 has an extension 53 to the outer end of which is mounted a coil spring 54 which extends upwardly from the extension 53 and is mounted on the casing for the unit 30 at its opposite end, as at 45.

There are also provided microswitches 56 and 57 operated by an extension 58 of the arm 48. The microswitch 56 is actuated when the valve 35 moves towards the position admitting air from the inlet 4 and microswitch 57 is actuated when the valve 35 moves to the position to admit air from the inlet 5. Upon operation of the microswitches 56 and 57 the motor 46 is stopped, the valve 35 having reached the required position.

In the event that power to the unit is interrupted the electromagnet 49 becomes de-energized so that the arm 48 is no longer operatively connected to the arm 50 whereby, if the valve 35 is in a position to admit air through the inlet 5, the spring 54 causes the valve 35 to move towards the other position under the action of the spring 54 since the resistance to such movement caused by the electromagnet 49 holding to the armature plate 52 is no longer in effect.

Usually the air conditioning unit is supplied with alternating current and means (not shown) is provided for supplying full wave rectified direct current for energizing the electromagnet 49. When power supply is normal the valve 35 is held in the position in which the inlet 5 is open by the detent torque of the synchronous motor and gearbox together with the holding power of the electromagnet 49 which holds the driven arm 50 against the action of the spring 54. Upon power interruption the spring 54 is able to move the valve 35 since the electromagnet 49 is no longer holding the arms 48 and 50 together.

As an alternative to the described arrangement the motor 46 may be connected to the arm 35 through an electromagnetic clutch (not shown) whereby if power should be interrupted the spring 54 moves the valve 35 upon deenergization of the electromagnetic clutch.

Although the device is particularly suitable for use in an air conditioning device as described above, the invention is not limited thereto. The method according to the invention can be applied for homogenizing determined characteristics of fluids, wherein the fluids may be gaseous as well as liquid and wherein the characteristics can be very diverse, such as for instance temperature, composition and the like.

## Claims

1. Method for equalising a characteristic of a room source fluid and an outside source fluid to duct a flow into a room with said characteristic substantially constant, in which source fluids this characteristic is mutually differing, and selectively ducting one of the source fluids at a time through an environment having a cumulative effect for the characteristic, **characterized in that** the alternate ducting of the source fluids takes place cyclically with a cycle duration selected relative to the accumulation capacity of the environment such that fluctuations of the characteristic in the homogenized fluid remain within predetermined limits.

2. Method as claimed in claim 1, wherein the characteristic is the temperature.

3. Method as claimed in claim 1, wherein each of the source fluids in the cycle is ducted for a period which is selected such that the characteristic has substantially a predetermined value in the homogenized fluid.

4. Device for equalising a characteristic of a room source fluid and an outside source fluid, comprising a housing, a duct defined in the housing and having a discharge end for homogenised fluid, and valve means at the opposite end for alternately connecting to the duct inlet openings for the room source fluid and the outside source fluid, respectively, in the housing, wherein the housing comprises means having an accumulation effect for the characteristic, communicating with the duct and comprises control means for the valve means, wherein said control means are arranged such, that the alternate ducting of the source fluids takes place cyclically with a cycle duration selected relative to the accumulation capacity of the environment such that fluctuations of the characteristic in the homogenized fluid remain within predetermined limits.

5. Device as claimed in claim 4, being an air conditioning device comprising an inlet opening for room air and an inlet opening for outside air.

6. Device as claimed in claim 5, wherein a heating element is accommodated in the duct.

7. Device as claimed in claim 4, wherein the valve means are biased in a position in which one of the inlet openings is closed and the control means are dimensioned such that in an active state these can overcome this bias.

8. Device as claimed in claim 7, wherein the control means comprise electromagnetic coupling means for coupling drive means with the valve means.

## Patentansprüche

1. Verfahren zum Ausgleichen einer Charakteristik eines Raumquellenfluides und eines Außenquellenfluides um einen Strom in einen Raum zu führen, wobei die Charakteristik im wesentlichen konstant ist, wobei diese Charakteristik in den Quellenfluiden zueinander unterschiedlich ist und wahlweises Führen eines der Quellenfluide auf einmal durch eine Umgebung, die einen kumulativen Effekt für die Charakteristik hat, **dadurch gekennzeichnet, daß** das abwechselnde Führen der Quellenfluide zyklisch stattfindet, mit einer Zyklusdauer, die ausgewählt wird in Abhängigkeit von der Akkumulationskapazität der Umgebung, derart, daß Fluktuationen der Charakteristik in dem homogenisierten Fluid innerhalb vorbestimmter Grenzen bleiben.

2. Verfahren nach Anspruch 1, bei welchem die Charakteristik die Temperatur ist.

3. Verfahren nach Anspruch 1, bei welchem jedes der Quellenfluide in dem Zyklus eine Zeit lang geführt wird, die derart ausgewählt wird, daß die Charakteristik im wesentlichen einen vorbestimmten Wert in dem homogenisierten Fluid hat.

4. Vorrichtung zum Ausgleichen einer Charakteristik eines Raumquellenfluids und eines äußeren Quellenfluids, umfassend ein Gehäuse, einen Kanal, der in dem Gehäuse begrenzt ist und ein Auslaßende für homogenisiertes Fluid hat, sowie Ventileinrichtungen am entgegengesetzten Ende, um abwechselnd Einlaßöffnungen für das Raumquellenfluid bzw. das Außenquellenfluid mit dem Kanal zu verbinden in dem Gehäuse, wobei das Gehäuse Einrichtungen umfaßt, die einen Akkumulationseffekt bzgl. der Charakteristik haben und mit dem Kanal kommunizieren und Steuermittel für die Ventileinrichtungen umfaßt, wobei die Steuermittel derart angeordnet sind, daß das abwechselnde Führen der Quellenfluide zyklisch stattfindet mit einer Dauer des Zyklus, die ausgewählt wird in Abhängigkeit von der Akkumulationskapazität der Umgebung, derart, daß Fluktuationen der Charakteristik in dem homogenisierten Fluid innerhalb vorbestimmter Grenzen bleiben.

5. Vorrichtung nach Anspruch 4, die eine Klimatisierungsvorrichtung ist, umfassend eine Einlaßöffnung für Raumluft und eine Einlaßöffnung für Außenluft.

6. Vorrichtung nach Anspruch 5, bei welcher ein Heizelement in dem Kanal aufgenommen ist.

7. Vorrichtung nach Anspruch 4, bei welcher die Ventileinrichtungen in einer Stellung vorgespannt sind, in welcher eine der Einlaßöffnungen geschlossen ist und die Steuermittel derart bemessen sind, daß diese in einem aktiven Zustand diese Vorspannung überwinden können.

8. Vorrichtung nach Anspruch 7, bei welcher die Steuereinrichtungen elektromagnetische Kupplungsmittel umfassen, um die Antriebsmittel mit den Ventileinrichtungen zu koppeln.

## Revendications

1. Procédé permettant d'égaliser une caractéristique d'un fluide source d'une pièce et d'un fluide source provenant de l'extérieur pour conduire un écoulement dans la pièce avec ladite caractéristique sensiblement constante, cette caractéristique différant d'un fluide source à l'autre, et d'amener, de manière sélective, un des fluides sources à la fois, dans un environnement présentant une fonction accumulative de cette caractéristique, **caractérisé en ce que** l'apport de l'autre fluide source s'effectue de manière cyclique avec une durée de cycle choisie en fonction de la capacité d'accumulation de l'environnement, de telle sorte que les fluctuations de la caractéristique dans le fluide homogénéisé restent dans des limites prédéterminées.

2. Procédé selon la revendication 1, selon lequel la caractéristique est la température.

3. Procédé selon la revendication 1, selon lequel chacun des fluides sources dans le cycle est conduit pendant une période telle que la caractéristique atteigne une valeur sensiblement prédéterminée dans le fluide homogénéisé.

4. Dispositif permettant d'égaliser une caractéristique du fluide source d'une pièce et d'un fluide source provenant de l'extérieur, comprenant un carter, une canalisation définie dans le carter et présentant une extrémité de débit du fluide homogénéisé, et des moyens formant clapets au niveau de l'extrémité opposée pour relier de manière alternative à la canalisation des ouvertures d'entrée, respectivement, du fluide source provenant de la pièce et du fluide source extérieur dans le carter, lequel carter comprend des moyens ayant une fonction d'accumulation de la caractéristique, communiquant avec la canalisation et comprenant des moyens de commande pour les moyens formant clapets, lesdits moyens de commande étant disposés de telle sorte que, l'apport alternatif des fluides sources s'effectue de manière cyclique avec une durée de cycle sélectionnée en fonction de la capacité d'accumulation de l'environnement afin que les fluctuations de la caractéristique dans le fluide homogénéisé restent dans des limites prédéterminées.

5. Dispositif selon la revendication 4, constituant un dispositif de conditionnement d'air comprenant une ouverture d'entrée pour l'air de la pièce et une ouverture d'entrée pour l'air extérieur.

6. Dispositif selon la revendication 5, selon lequel un élément chauffant est monté dans la canalisation.

7. Dispositif selon la revendication 4, selon lequel les moyens formant clapets sont décalés dans une position dans laquelle une des ouvertures d'entrée est fermée et les moyens de commande dimensionnés de telle sorte que dans un état actif, ces derniers peuvent s'opposer à ce décalage.

8. Dispositif selon la revendication 7, selon lequel les moyens de commande comprennent des moyens de couplage électromagnétiques pour coupler les moyens d'entraînement aux moyens formant clapets.
